# EUROPEAN PATENT APPLICATION

(11) **EP 1 700 634 A1**
(43) Date of publication of application: **13.09.2006**
(21) Application number: 05075579.2
(22) Date of filing: 09.03.2005
(51) Int. Cl.: B01J 29/04, B01J 38/60, C10G 11/18, C10G 11/05

(54) **Process for upgrading an FCC equibrium catalyst**

(71) Applicant: Albemarle Netherlands B.V., 3818 LE Amersfoort (NL); PETROLEO BRASILEIRO S.A. - PETROBRAS, Rio de Janeiro (BR)
(72) Inventor: O'Connor, Paul, 3871 KM Hoevelaken (NL); Laheij, Erik Jeroen, 1181 SW Amstelveen (NL); Stamires, Dennis, Newport Beach, CA 92660 (US); Chamberlain Pravia, Oscar René, 22745-270 Rio de Janeiro (BR); Lam, Yiu Lau, Rio de Janeiro (BR); Roncolatto, Rodolfo Eugenio, Rio de Janeiro (BR)
(74) Representative: Rasser, Jacobus Cornelis

(57) **Abstract**

Process for the preparation of a catalyst composition comprising the steps of (a) treating an FCC equilibrium catalyst that contains alumina and zeolite with an acidic solution to obtain an acid-treated equilibrium catalyst, and (b) contacting the acid-treated equilibrium catalyst with an aqueous solution or suspension of a divalent metal compound.

With this process, FCC equilibrium catalysts - even when highly contaminated with vanadium - can be upgraded to make them suitable again for use in catalytic processes, for instance as catalyst additives in FCC.

## Description

Equilibrium catalyst (E-cat) that is withdrawn from a fluid catalytic cracking (FCC) unit can be either re-used or disposed of as spent catalyst. E-cat still having a low V content and sufficient accessibility and activity can be re-used in the FCC unit as start-up catalyst, to compensate for losses or as flushing catalyst. E-cat contaminated with a high amount (generally above 4,000 ppm) of V is not suitable for re-use in FCC, however. Such highly contaminated E-cat can be re-used in various non-catalytic applications, such as steel works, road surfacing, manufacture of bricks and cement.

It would be desirable to find a catalytic application for this highly contaminated E-cat. It is even more desired to find an FCC-related application for this material.

The present invention provides a process for upgrading FCC equilibrium catalysts, after which they are again suitable to be used for catalytic purposes, for instance as FCC additive.

The process according to the invention comprises the steps of:
a) treating an FCC equilibrium catalyst that contains alumina and zeolite with an acidic solution to obtain an acid-treated equilibrium catalyst,
b) contacting the acid-treated equilibrium catalyst with an aqueous solution or suspension of a divalent metal compound.

During step b), divalent metal will be incorporated into the equilibrium catalyst and, optionally after a subsequent calcination step, the resulting catalyst composition can suitably be used as a catalyst or adsorbent in various hydrocarbon conversion reactions. In particular, it can suitably be re-used in FCC as an additive for, e.g., the reduction of NOx and SOx emissions, the production of sulfur and nitrogen-lean fuels, and the passivation of contaminating metals such as V.

During step b), the divalent metal compound can react with the alumina that is present in the equilibrium catalyst, thereby forming an anionic clay. The presence of this anionic clay or its calcination product (a rehydratable mixed metal oxide) makes the resulting catalyst composition even more suitable as an FCC additive for the reduction of NOx and SOx emissions and the production of sulfur and nitrogen-lean fuels.

The alumina content of the FCC equilibrium catalyst preferably is 5-90 wt%, more preferably 10-80 wt%, and most preferably 20-40 wt%.
The zeolite content of the FCC equilibrium catalyst preferably is 5-60 wt%, more preferably 20-40 wt%. The zeolite preferably is zeolite Y, USY, RE-Y, or RE-USY. Preferably, the equilibrium catalyst comprises rare earth metals (RE). This rare earth metal content preferably is up to 10 wt%, more preferably 1-7 wt%, calculated as rare earth metal oxides and based on the weight of the zeolite.
The FCC equilibrium catalyst may further contain 0-50 wt%, more preferably 5-20 wt% of silica and balance clay, e.g. kaolin.
All weight percentages are calculated as oxides and based on the total weight of the catalyst.

FCC equilibrium catalysts contaminated with high vanadium concentrations, i.e. at least 50 ppm, more preferably at least 500 ppm, and most preferably at least 1000 ppm V, are especially preferred, in particular for the production of SOx-reducing additives.

### Step a)

In step a) of the process of the invention, the FCC equilibrium catalyst is treated with an acidic solution. This treatment serves to activate the alumina present in the equilibrium catalyst, thereby making it more reactive towards the divalent metal compound in step b).

The pH of this solution preferably is at least 2, more preferably at least 3, in order to prevent destruction of the zeolite structure by the acid.
Suitable acids include nitric acid, hydrochloric acid, sulfuric acid, acetic acid, oxalic acid, and formic acid.
The acid treatment is preferably conducted for a period of 30 minutes to 24 hours, more preferably 30 minutes to 12 hours, and most preferably 30 minutes to 6 hours.
The temperature of the suspension during acid treatment preferably is in the range of 20 to 250°C, more preferably 20 to 200°C, and most preferably 60 to 180°C.

In addition, chelating agents such as EDTA and acetyl-acetone may be present during the acid treatment in order to further activate the alumina.

Before or during step a), the equilibrium catalyst can be mechanically treated in order to reduce its particle size and to increase the reaction rate. Suitable instruments for this mechanical treatment include ball mills, high-shear mixers, colloid mixers, and electrical transducers that can introduce ultrasound waves into a slurry.

### Step b)

In step b), the acid-treated equilibrium catalyst that was prepared in step a) is contacted with an aqueous solution or suspension of a divalent metal compound.
This is preferably performed by adding the aqueous solution or suspension of the divalent metal compound to the slurry prepared in step a), without isolating the acid-treated equilibrium catalyst from the slurry prior to this addition.
Although it is less preferred, the acid-treated equilibrium catalyst and the divalent metal-containing solution or suspension can also be combined by isolating the acid-treated equilibrium catalyst from the slurry of step a) and (i) adding the isolated equilibrium catalyst to a solution or suspension of the divalent metal compound to form a slurry, or (ii) impregnating the isolated equilibrium catalyst with an aqueous solution of a water-soluble divalent metal compound.

The pH of the resulting mixture preferably is 7 or higher, more preferably 8-14, and most preferably 9-14. In order to reach the desired pH, a base may be added to the mixture. Suitable bases include NaOH, NH₄OH, KOH, sodium aluminate, and sodium carbonate. This base may be added to a slurry containing the acid-treated equilibrium catalyst, before and/or after addition of the aqueous solution or suspension of the divalent metal compound.

Suitable divalent metals include Ni²⁺, Co²⁺, Cu²⁺, Cd²⁺, Ca²⁺, Zn²⁺, Mg²⁺, Fe²⁺, Ba²⁺, Sr²⁺, and Mn²⁺, wherein Mg²⁺, Zn²⁺, Mn²⁺, Ba²⁺, Ca²⁺, and Sr²⁺ are the most preferred.
Examples of divalent metal compounds are inorganic salts (e.g. chloride, nitrate, or sulfate), organic salts (e.g. formate, acetate), oxides, hydroxides, carbonates, and hydroxy carbonates of the divalent metal. Oxides, hydroxides, carbonates, and hydroxy carbonates are the preferred divalent metal compounds, because they do not leave undesired anions in the resulting composition or the waste water.

During contacting of the equilibrium catalyst and the divalent metal compound, the temperature preferably is in the range of 20-300°C, more preferably 25 to 225°C, even more preferably 80 to 200°C, and most preferably 100 to 170°C. The pressure preferably is atmospheric or, if temperatures above 100°C are used, autogeneous.
The acid-treated equilibrium catalyst is contacted with the divalent metal compound-containing solution or suspension for 5 minutes to 24 hours, preferably 0.5 to 6 hours, the desired time depending on the temperature, the type of divalent metal compound used, and whether or not anionic clay formation is desired. For anionic clay formation, a contacting time of at least 30 minutes is preferred.

During step b), the mixture containing divalent metal compound and acid-treated equilibrium catalyst can be mechanically treated in order to reduce the size of the particles in the mixture, which may positively influence the reaction rate. Suitable instruments for such a mechanical treatment include ball mills, high-shear mixers, colloid mixers, and electrical transducers that can introduce ultrasound waves into a slurry.

Preferably, at least part of the aluminium and at least part of the divalent metal present in the catalyst composition after step b) are in the form of an anionic clay. More preferably, the said catalyst composition comprises at least 5 wt% of anionic clay (calculated as oxides and based on the total weight of the catalyst composition). Most preferably, said catalyst composition comprises 10-50 wt% of anionic clay.

If the acid-treated equilibrium catalyst and the solution or suspension of the divalent metal compound are mixed to form a slurry, an aluminium source may be added to the slurry, thereby allowing the formation of an (additional) amount of anionic clay.
Suitable aluminium sources include aluminium alkoxide, aluminium oxides and hydroxides such as transition alumina, aluminium trihydrate (gibbsite, bayerite, Bauxite Ore Concentrate) and its thermally treated forms (including flash-calcined alumina), alumina sols, amorphous alumina, and (pseudo)boehmite. Although it is less preferred, alumina salts such as aluminium nitrate, aluminium chloride, aluminium chlorohydrate, sodium aluminate, and aluminium sulfate may also be used.

Anionic clays are layered structures corresponding to the general formula

[Mₘ²⁺Mₙ³⁺(OH)_{2m+2n.}](X_{n/z}^{z-}).bH₂O

wherein M²⁺ is a divalent metal, M³⁺ is a trivalent metal, m and n have a value such that m/n=1 to 10, preferably 1 to 6, and b has a value in the range of from 0 to 10, generally a value of 2 to 6, and often a value of about 4. X is an anion with valance z, such as CO₃²⁻, OH- or any other anion normally present in the interlayers of anionic clays. It is more preferred that m/n should have a value of 2 to 4, more particularly a value close to 3. In the prior art, anionic clays are also referred to as layered double hydroxides and hydrotalcite-like materials.
The anionic clay that may be formed in step b) contains Al as the trivalent metal.
The divalent metal originates from the divalent metal compound of step b).
The anion X in the anionic clay that can be formed in step b) preferably is CO₃²⁻, resulting from the atmospheric CO₂ which is normally present during the reaction. If OH- is the desired anion, it is advised to conduct the process under an inert atmosphere, thereby preventing the uptake of CO₂. If the incorporation of other anions is desired, divalent metal salts (e.g. nitrate, chloride, sulfate) should be used as the divalent metal compound, or the desired anions should be added separately to the mixture of step b).

After step b), the catalyst composition is preferably dried. If desired, the dried composition may then be calcined. This calcination will allow any divalent metal that has not reacted to form anionic clay to be transformed to its oxide or to react with, e.g., alumina to form a mixed metal oxide. If anionic clay was formed during the process of the invention, calcination will convert it into a rehydratable mixed metal oxide (solid solution) or, at higher temperatures, into a spinel-type oxide.
Calcination is preferably conducted at 200-1000°C, more preferably 300-800°C.
If the calcined composition is contacted with water again, any rehydratable mixed metal oxides formed will be rehydrated to an anionic clay. This rehydration step also allows the incorporation of additives by having these additives present in the rehydration slurry.

Not only during the optional rehydration step, but also during step a) and/or step b) additives can be present. Suitable additives include rare earth metals (for example La and Ce), Si, P, B, alkaline earth metals (e.g. Ca, Ba), and/or transition metals (for example Mn, Fe, Ti, Zr, Cu, Ni, Zn, Mo, W, V, Sn, Pt, Pd, Ru). It is also possible to incorporate these additives into the catalyst composition after its preparation by, e.g., precipitation or impregnation.

The process according to the invention can be performed batch-wise or in a continuous mode, for instance in an apparatus containing at least two conversion vessels, as described in WO 03/078055.

The catalyst composition prepared by the process of the present invention can suitably be re-used in FCC processes as an additive for the reduction of SOx and NOx emissions, for the production of sulfur and nitrogen-lean fuels (e.g. gasoline and diesel), and as a metal trap for V contaminants.
It can also be used as a catalyst (additive) or adsorbent in other heavy oil treatment processes, such as Resid FCC, (resid) hydroprocessing of, e.g., H-oil, conversion of biomass or biowaste, removal of organic acids from heavy hydrocarbons (e.g. crude oils), and upgrading of heavy hydrocarbons by thermal treatment.
An example of a process for the removal of organic acids from crude oils in which the catalyst composition prepared according to the present invention can suitably be used is the process disclosed in International Patent Application No. PCT/EP04/011361. This process involves contacting the crude oil with the catalyst composition in a reactor vessel under agitation and under a flow of inert gas at a temperature in the range of 200-500°C.
An example of a process for upgrading heavy hydrocarbons by thermal treatment in which the catalyst composition prepared according to the present invention can suitably be used is the process disclosed in non-prepublished European Patent Application No. 04077616.3. This process involves preparing a slurry comprising the hydrocarbon feed and the catalyst composition, thermally treating said slurry at a temperature in the range of 250-550°C, optionally separating the treated slurry into a lower- and a higher-boiling fraction, and separating the catalyst composition and formed coke (if any) from the treated slurry or the higher-boiling fraction. Said catalyst composition may then be regenerated and re-used in the same process.

## Claims

1. Process for the preparation of a catalyst composition comprising the steps of:
a) treating an FCC equilibrium catalyst that contains alumina and zeolite with an acidic solution to obtain an acid-treated equilibrium catalyst,
b) contacting the acid-treated equilibrium catalyst with an aqueous solution or suspension of a divalent metal compound.

2. A process according to claim 1 wherein an aluminium source is added to the solution or suspension of step b).

3. A process according to claim 1 or 2 wherein the divalent metal is selected from the group consisting of Mg, Zn, Mn, Ca, Ba, and Sr.

4. A process according to any one of the preceding claims wherein the pH of the solution or suspension of step b) is adjusted to above 7 using a base.

5. A process according to any one of the preceding claims wherein the alumina content of the FCC equilibrium catalyst is 10 to 80 wt%.

6. A process according to any one of the preceding claims wherein the FCC equilibrium catalyst comprises at least 50 ppm vanadium.

7. A process according to any one of the preceding claims wherein the resulting catalyst composition comprises anionic clay.

8. A process according to any one of the preceding claims wherein the resulting catalyst composition comprises a divalent metal oxide or hydroxide.

9. A process according to any one of the preceding claims, followed by drying and subsequently calcining the product of step b) at a temperature in the range of 200-1000°C.

10. A process according to claim 9, followed by rehydration of the calcined catalyst composition.

11. Catalyst composition obtainable by the process according to any one of the preceding claims.

12. Use of the catalyst composition according to claim 11 as a catalyst or adsorbent in the treatment of heavy oil.

13. Use according to claim 12 wherein the treatment of heavy oil involves fluid catalytic cracking, hydroprocessing, removal of organic acids, or a slurry-phase thermal treatment.
